# EUROPEAN PATENT APPLICATION

(11) **EP 1 860 877 A2**
(43) Date of publication of application: **28.11.2007**
(21) Application number: 07010509.3
(22) Date of filing: 25.05.2007
(51) Int. Cl.: H04N 7/16, H04N 5/00

(54) **Broadcast reception device**

(30) Priority: 25.05.2006 JP 2006144935
(71) Applicant: Funai Electric Co., Ltd., Daito-shi, Osaka 574-0013 (JP)
(72) Inventor: Hida, Kiyonori, Daito-Shi Osaka 574-0013 (JP)
(74) Representative: Beetz & Partner

(57) **Abstract**

A broadcast reception device 12 includes a storage unit 18, a viewing period measurement unit 19 that measures a period of viewing a program, a program classification unit 20 that classifies a viewed program based on a predetermined program classification, a viewing period accumulation unit 21 that accumulates the period measured by the viewing period measurement unit 19 based on the type classified by the program classification unit, and stores the accumulated period in the storage unit 18, and a display information generation unit 22 that displays the accumulation information of the viewing period stored in the storage unit 18 in predetermined timing on a display device 13.

## Description

### BACKGROUND OF THE INVENTION

### Field of the Invention

The present invention relates to a broadcast reception device, and particularly relates to a broadcast reception device which can receive pay broadcasts such as ones via a cable television system, and can provide users with materials for making decision on subscription contracts.

### Description of Related Art

Conventionally, with a system which distributes pay broadcasts such as a cable television system, a user who wants to view the pay broadcasts should make a subscription contract with a distributor for the pay programs to be viewed in advance. According to this subscription contract, the distributor assigns a subscription permission code, a decryption key, and the like to the user, and the user can subscribe only contracted pay channels on a television receiver.

As for the contract of the pay broadcasts, though channels are selected from a large number of channels, and are contracted on monthly basis or the like in general, there may arise a case where the channels selected by the user on making the contract have changed subsequently, and the user change the preference and infrequently view the contracted channels. Moreover, pay channels which suits user's taste may be added after the subscription contract was made. In these case, the user will change the subscription contract.

However, since the change or cancel of the contract is troublesome, the user often hesitates in changing or canceling the contract, and will become unsatisfied with the distributor of the pay broadcasts when the user knows that the user has incurred a loss due to the contract. Thus, there arises distrustful feeling between the user and the distributor of the pay broadcasts, resulting in an obstacle to increase the number of the contracts of the pay broadcasts.

With this respect, a user can make or terminate a contract by means of a receiver terminal according to JP A. 2004-96357, which is beneficial and useful for expanding pay broadcasts. However, the receiver terminal disclosed in JP A 2004-96357 does not provide sufficient materials for deciding to cancel or change the contract, and the user may hesitate in canceling or changing the contract. Especially, the number of subscribing pay channels increases, the decision therefore becomes difficult, and the user consequently may feel bothering with the cancel or change of the contract.

### SUMMARY OF THE INVENTION

In view of the foregoing problems, it is an object of the present invention to provide a broadcast reception device, which enables reception of pay channels according to a subscription contract, and enables a user to easily recognize a viewing tendency thereof, thereby providing the user with information useful as materials for determining to change or cancel the subscription contract.

In order to achieve above described object, a broadcast reception device in accordance with a first aspect of the present invention includes: a storage unit, a viewing period measurement unit that measures a period of viewing a program, a program classification unit that classifies a viewed program based on a predetermined program classification, a viewing period accumulation unit that accumulates the period measured by the viewing period measurement unit based on the type classified by the program classification unit, and stores the accumulated period in the storage unit, and a display information generation unit that displays the accumulation information of the viewing period stored in the storage unit in predetermined timing on a display device.

Moreover, a broadcast reception device in accordance with a second aspect of the present invention further includes a descrambling unit that descrambles a scrambled television broadcast signal in order to subscribe a program of a pay channel or free channel based on a subscription contract with a broadcaster. Further, the broadcast reception device is characterized by a structure in which the predetermined program classification includes at least a classification based on a channel number of the pay channel, and the display information generation unit also generates warning information which notifies a pay channel for which the accumulation of the viewing period is shorter than a predetermined criterion.

Moreover, a broadcast reception device in accordance with a third aspect of the present invention provides the above broadcast reception device, where the display information generation unit generates a fee per period as information to be displayed based on a subscription contracted fee for each pay channel and the accumulation period of the viewing period.

Moreover, a broadcast reception device in accordance with a fourth aspect of the present invention provides the above broadcast reception device, further including an electronic program guide acquisition unit that acquires an electronic program guide where the program classification unit classifies the viewed program based on the electronic program guide.

Moreover, a broadcast reception device in accordance with a fifth aspect of the present invention provides the above broadcast reception device, where the program classification unit carries out classification based on a program category, further including a determination unit that determines whether an accumulation of a viewing period in a specific category satisfies a predetermined criterion, a search unit that searches the electronic program guide for a pay channel which satisfies a predetermined criterion in the program category determined by the determination unit, where the display information generation unit generates display information introducing the pay channel searched by the search unit.

In order to achieve above object, a broadcast reception device in accordance with a sixth aspect of the present invention includes: a descrambling unit that descrambles a scrambled television broadcast signal in order to subscribe a program of a pay channel or free channel based on a subscription contract with a broadcaster, a storage unit, a viewing period measurement unit that measures a period of viewing a program, an electronic program guide acquisition unit that acquires an electronic program guide, a program classification unit that classifies a viewed program based on a channel number and based on the acquired electronic program guide, a viewing period accumulation unit that accumulates the period measured by the viewing period measurement unit based on the type classified by the program classification unit, and stores the accumulated period in the storage unit, a determination unit that determines a program category which has the longest accumulation of the viewing period, a search unit that searches the electronic program guide for a pay channel which most frequently broadcasts programs in the determined program category, and a display information generation unit that displays accumulation information of the viewing period and the searched pay channel in predetermined timing.

According to the first aspect of the present invention, since it is possible to view the viewing period information for the respective classified types on the display device such as a television receiver while the programs are classified, a user can easily recognize a viewing tendency of the user. As a result, the user can easily determine to continue, change, or cancel the subscription contract of pay channels or the like.

According to the second aspect of the present invention, since the user can determine pay channels for which the viewing period is short at a glance on the broadcast reception device according to the first aspect, the user can easily determine to continue, change, or cancel the subscription contract of the pay broadcasts, and can easily have a sense of satisfaction.

According to the third aspect of the present invention, since it is possible to recognize the fee per period based on the subscription contracted fee in addition to the viewing period on the broadcast reception device according to the second aspect, the user can more easily determine to continue, change, or cancel the subscription contract of the pay broadcasts.

Moreover, according to the fourth aspect of the present invention, since it is possible to recognize the viewing period for the respective program categories on the broadcast reception device according to any of the first to third aspects, and thus to precisely recognize the viewing tendency of the programs of the user, the user can more easily determine to continue, change, or cancel the subscription contract of the pay broadcasts.

Moreover, according to the fifth aspect of the present invention, since it is possible to introduce the pay channels which frequently broadcast programs in the favorite categories of the user to the user on the broadcast reception device according to the fourth aspect, the user can easily determine to change contents of the contract.

According to the sixth aspect of the present invention, since it is possible to view the viewing period information classified according to the channel number and program category on the display device such as a television receiver, the user can easily recognize a viewing tendency of the programs which the user views. As a result, the user can easily determine to continue, change, or cancel the subscription contract of pay channels or the like. Moreover, since the user can obtain the information on the program categories which the user often views, the user can more easily determine a subsequent contract.

### BRIEF DESCRIPTION OF THE DRAWINGS

FIG. 1 is a block diagram to show an embodiment of a distribution system for pay broadcasts provided with a broadcast reception device according to the present invention;
FIG. 2 is a block diagram to show a configuration of the broadcast reception device according to a first embodiment;
FIG. 3 is a diagram to show an example of a state where data transmitted from a display information generation unit is shown on a screen of a display device according to the first embodiment;
FIG. 4 is a flowchart of an operation to show a viewing tendency of a user as information on the broadcast reception device according to the first embodiment;
FIG. 5 is a block diagram to show a configuration of the broadcast reception device according to a second embodiment;
FIG. 6 is a diagram to show an example of a state where data transmitted from the display information generation unit is shown on the screen of the display device according to the second embodiment;
FIG. 7 is a block diagram to show a configuration of the broadcast reception device according to a third embodiment;
FIG. 8 is a diagram to show an example of a state where data transmitted from the display information generation unit is shown on the screen of the display device according to the third embodiment; and
FIG. 9 is a flowchart of an operation to show a viewing tendency of the user as information on the broadcast reception device according to the third embodiment.

### DETAILED DESCRIPTION OF PREFERRED EMBODIMENTS

Hereafter a description will now be given of embodiments of the present invention with reference to drawings. The embodiments described herein are mere examples, and the present invention thus should not be limited only to these embodiments.

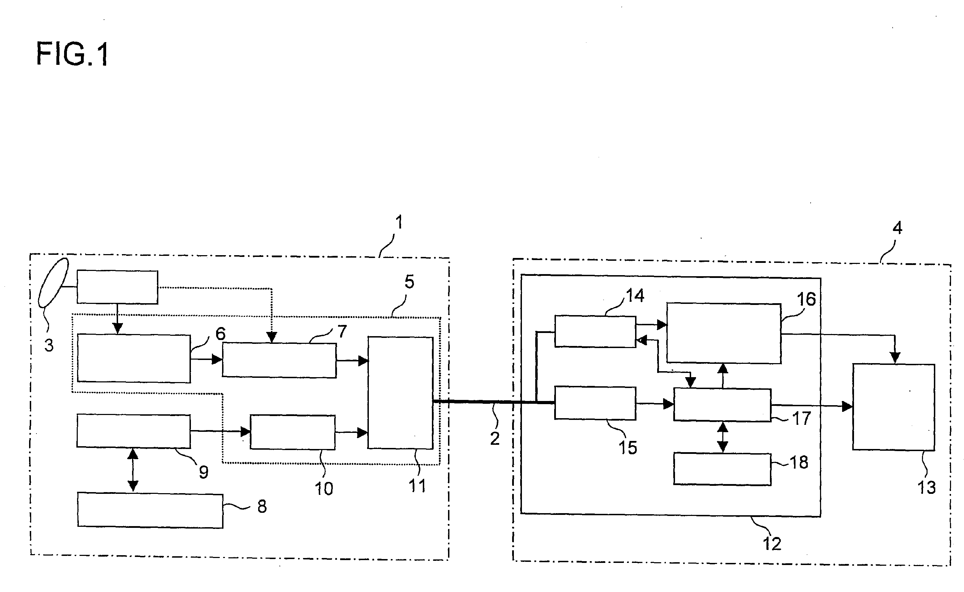

FIG. 1 is a block diagram to show a distribution system for pay broadcasts provided with a broadcast reception device according to the present invention, and shows a cable television system as an example. A brief description will now be given of this system for a description of functions of the broadcast reception device. A cable television system implies a wired television system which transmits video via coaxial cables and optical fiber cables without antenna.

A distribution center 1 is a service center which provides a subscriber terminal 4 via a network cable 2, which is a transmission line for signals, with BS broadcasts and CS broadcasts received by a community antenna 3 installed in the distribution center 1. A television broadcast signal for a pay broadcast received by the community antenna 3 is scrambled by a scrambling unit 6 integrated into a head end 5, and is modulated by a video modulator 7. A television broadcast signal for free broadcast is not scrambled by the scrambling unit 6, and is only directly modulated by the video modulator 7.

Moreover, a terminal number of a broadcast reception device 12 owned by a subscriber (user) of pay broadcasts managed by a contract management system 8 is transmitted as a descrambling signal for descrambling a scrambled television broadcast signal by a subscription control device 9, and is modulated by a modem 10 installed on the head end 5. The television broadcast signal scrambled and modulated by the video modulator 7, and the descrambling signal modulated by the model 10 are mixed by a mixer 11, and the resulting mixed signal is transmitted to the subscriber terminal 4.

On the other hand, the subscriber terminal 4 includes a broadcast reception device 12, and causes the broadcast reception device 12 to receive the television broadcast broadcasted by the distribution center 1, which enables the television broadcast to be viewed on a display device 13 such as a television receiver connected to the broadcast reception device 12. The broadcast reception device 12 includes a tuner 14, a modem 15, a descrambling unit 16, a CPU 17, and a memory (a storage unit) 18.

The tuner 14 is used to select and to view a channel of the television broadcasts from the distribution center 1. If a specific pay channel is selected by a channel selection of the user, after a signal is demodulated by the modem 15, the CPU 17 compares the terminal number added to the descrambling signal transmitted from the distribution center 1 and an own terminal number stored in the memory 18 connected to the CPU 17 with each other. If both the terminal numbers match each other, the descrambling unit 16 descrambles the scrambled television broadcast signal using the received descrambling signal. Consequently, the user comes to be able to view the television broadcast on the pay channel. On the other hand, the user can view a free channel without the descrambling by the descrambling unit 16 as described above.

According to the present invention, the broadcast reception device 12 is configured to display a viewing tendency of the user as information for the user to determine whether to continue, change, or cancel the subscription contract for pay channels. A description will now be given of three embodiments of this configuration: first to third embodiments.

### First Embodiment

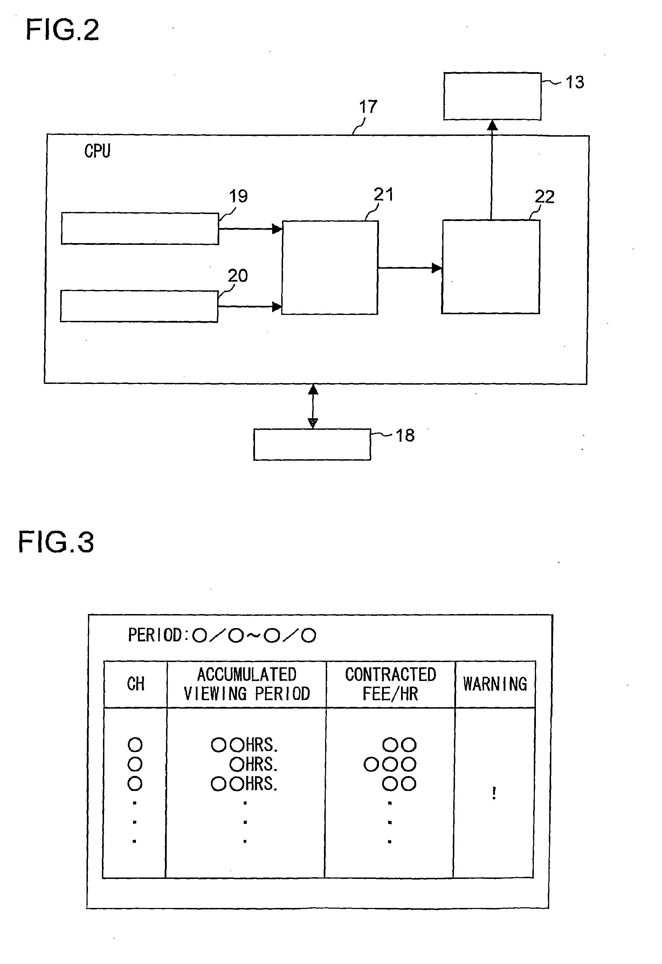

First, a description will be given of the broadcast reception device 12 according to the first embodiment. FIG. 2 is a block diagram to show a configuration of the broadcast reception device 12 according to the first embodiment. FIG. 2 shows only an extracted configuration according to the present invention which shows the viewing tendency of the user as information for the user to easily determine whether to continue, change, or cancel the subscription contract. Moreover, for the sake of illustration, the display device 13 connected to the broadcast reception device 12 is also shown. As shown in FIG. 2, the CPU 17 equipped for the broadcast reception device 12 according to the first embodiment includes a viewing period measurement unit 19, a program classification unit 20, a viewing period accumulation unit 21, and a display information generation unit 22. A detailed description will now be given of the respective units.

If the user starts viewing a new program of the cable television or changes the channel number for viewing a new program, the viewing period measurement unit 19 starts measuring the viewing period regardless whether the program is on a pay channel or a free channel. The measurement of the viewing period is finished if the user finishes viewing the program of the cable television, or changes the channel. These determinations can be made according to whether the television broadcast signal is transmitted to the broadcast reception device 12, for example, for the first case, and by means of a configuration which obtains the channel information from the tuner 14, for example, for the second case.

The viewing period measured by the viewing period measurement unit 19 is transmitted to the viewing period accumulation unit 21, which is detailed later. After transmitting the viewing period to the viewing period accumulation unit 21, the period measured by the viewing period measurement unit 19 is reset to zero, and the viewing period measurement unit 19 becomes ready for the measurement of the viewing period of the next program.

Though the measurement of the viewing period may be started as soon as the user starts viewing a program, the user may view a program on a channel for a slight period, and may change the channel, and the measurement may thus be started when a predetermined period (such as one minute) has elapsed since the user starts viewing a program on a certain channel.

The program classification unit 20 classifies a program for which the viewing period is being measured by the viewing period measurement unit 19. According to the first embodiment, this classification of the programs is made based on the channels of the viewed programs. Thus, the program classification unit 20 recognizes which station (channel number) is broadcasting a channel presently being viewed by detecting a tuning state of the tuner 14, for example, thereby classifying the program being viewed. The program classification unit 20 transmits the channel number of the program being viewed to the viewing period accumulation unit 21.

Though, according to the present embodiment, there is provided a configuration where the classification of the program by the program classification unit 20 is carried out while the program is being viewed, there may be a configuration where the program is classified when the user has finished viewing the program, for example. In this case, there is required means for storing the viewed channel or the like.

The viewing period accumulation unit 21 accumulates the viewing period by adding the viewing period measured by the viewing period measurement unit 19 to a period which has already been accumulated if such a period is present according to the classification of the programs carried out by the program classification unit 20, namely according to the channel number according to the first embodiment, and stores the accumulated viewing period along with the channel number information in the memory 18. If there is no accumulated period, the viewing period accumulation unit 21 directly stores the viewing period transmitted from the viewing period measurement unit 21 along with the channel number information in the memory 18.

The accumulation information of the viewing period stored in the memory 18 is shown on the display device 13 in predetermined timing, described later, and is then reset to zero. There may be provided a configuration that the accumulation information may be stored as data for the last month, for example, before the reset.

The display information generation unit 22 coverts the information stored in the memory 18 by the viewing period accumulation unit 21 into information which can be shown on the display device 13, and transmits the converted information to the display device 13. The display information generation unit 22 transmits the data to the display device 13 in predetermined timing according to a period of the subscription contract between a broadcaster and the user monthly, for example. This predetermined timing is preferably changed freely according to preference of the user in order to provide the user with freedom.

FIG. 3 shows an example of a state where data transmitted from the display information generation unit 22 is shown on a screen of the display device 13. As shown in FIG. 3, the user can recognize the periods viewed by the user for the respective channels for the certain period by means of the screen on the display device 13, and thus can determine to cancel the subscription contract for channels with a short viewing period. The display information generation unit 22 may transmit data to the display device 13 so that a warning mark is shown for pay channels (as well as free channels, of course) whose viewing period is shorter than a predetermined period in addition to the above data as shown in FIG. 3.

There may be provided a configuration where the user can set the predetermined period, or a configuration where the broadcaster may set the predetermined period in advance. Moreover, though there is provided the configuration that the warning mark is shown according to the present embodiment, the warning is not limited to the warning mark, and may be modified in various ways. In other words, there may be provided a configuration that characters representing the warning are shown, or a configuration that the channel number to which the warning is intended is shown in a different color, for example. Further, though there may be provided a configuration that the warning information is not shown, the user can more easily make determination for the contract if the warning information is shown as the present embodiment.

Moreover, the display information generation unit 22 is configured to calculate a contracted fee per viewing period by dividing a subscription contracted fee by the viewing period for the respective pay channels (as well as free channels, of course), and transmits also the calculated contracted fees per viewing period to the display device 13. The user thus can easily determine whether to continue, change, or cancel the contract even if the contracted fee is different for the respective programs as shown in FIG. 3. The subscription contracted fees for the respective channel numbers are stored in the memory 18 or the like connected to the CPU 17, for example.

Though there is provided the configuration that the contracted fee per viewing period is calculated and is shown according to the present embodiment, there may be provided a configuration without display in this way or the like, of course.

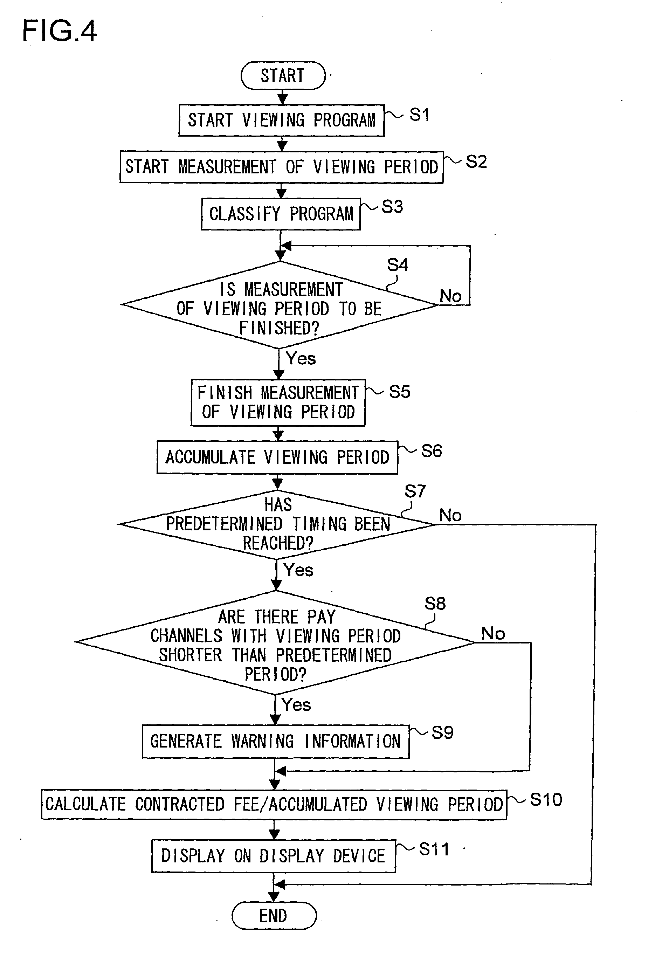

A description will now be given of an example of the operation carried out by the CPU 17 configured as described above to show the viewing tendency of the user as information to promote the determination by the user whether to continue, change, or cancel the subscription contract with reference to a flowchart shown in FIG. 4. First, if the user selects a channel of the cable television system to start viewing a program (step S1), the viewing period measurement unit 19 accordingly starts the measurement of the viewing period (step S2). The program classification unit 20 then recognizes the channel number presently being viewed, and classifies the program (step S3). The type (channel number in this case) of the classified program is transmitted to the viewing period accumulation unit 21.

The CPU 17 then determines whether the measurement of the viewing period is to be finished or not (step S4). According to the present embodiment, the measurement of the viewing period is finished if the channel number is changed, or the viewing the program of the cable television system is finished as described above. If the CPU 17 determines that the measurement of the viewing period is to be finished, the measurement of the viewing period by the viewing period measurement unit 19 is finished (step S5). The measured viewing period is transmitted to the viewing period accumulation unit 21. On the other hand, if the CPU 17 determines that the measurement of the viewing period is not to be finished, the measurement of the viewing period continues.

The viewing period accumulation unit 21 accumulates the viewing period according to the type (channel number according to the present embodiment) of the program classified by the program classification unit 20 (step S6). The accumulated viewing period information is stored in the memory 18.

The CPU 17 then determines whether the predetermined timing for notifying the viewing tendency of the user has been reached or not (step S7). If the predetermined timing has not been reached, the CPU 17 finishes the operation without to show the viewing tendency on the display device 13, and carries out the steps S1 to S7 if the user starts viewing a next program. On the other hand, if the predetermined timing for notifying the viewing tendency of the user has been reached, the CPU 17 determines whether there are pay channels whose accumulated viewing period is shorter than the period predetermined by the user or the like (step S8).

If there are such pay channels, the display information generation unit 22 generates warning information (step S9). On the other hand, if there are no such pay channels, the CPU 17 proceeds to the next step without generating the warning information. In other words, the contracted fee per viewing period is calculated by dividing the subscription contracted fee (monthly contracted fee, for example) by the viewing period for the respective pay channels (step S10). The display information generation unit 22 then generates display information on the accumulated viewing periods for the respective channel numbers, the warning information, and the contracted fees per viewing period for the respective channel numbers (only for the pay channels) stored in the memory 18, and transmits the generated display information to the display device 13, and the display device 13 displays the information (step S11).

When the user finishes viewing the cable television (this case may occur in the step S4), though a main power supply of the broadcast reception device 12 may be turned off, if there is provided a configuration that the steps S5 to S11 are carried out if necessary, and the main power supply is then turned off upon the completion of the operation, it is possible to notify the user of the viewing tendency by means of the above flow. Moreover, there is preferably provided a configuration that the information on the viewing tendency is shown on the display device when the user has finished viewing a program so as not to show the information on the viewing tendency on the display device 13 while the user is viewing the program.

### Second Embodiment

A description will now be given of a second embodiment of the broadcast reception device 12, which can show the viewing tendency of the user as information. The same components are denoted by the same numerals as of the first embodiment and will not be further explained.

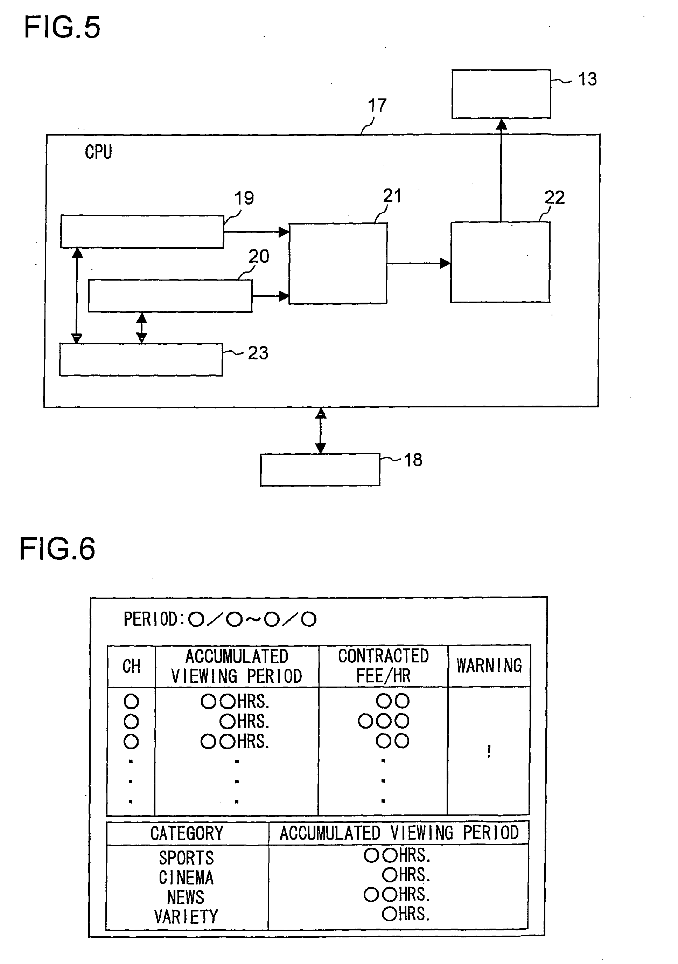

FIG. 5 is a block diagram to show a configuration of the broadcast reception device 12 according to the second embodiment. FIG. 5 shows only a configuration which shows the viewing tendency of the user as information for the user to easily determine whether to continue, change, or cancel the subscription contract. Moreover, for the sake of illustration, the display device 13 connected to the broadcast reception device 12 is also shown. As shown in FIG. 5, the CPU 17 equipped for the broadcast reception device 12 according to the second embodiment includes the viewing period measurement unit 19, the program classification unit 20, the viewing period accumulation unit 21, the display information generation unit 22, and an EPG acquisition unit 23.

The second embodiment is different from the first embodiment in that the second embodiment includes the EPG acquisition unit 23. The EPG (Electronic Program Guide) is publicly known, and a description thereof is therefore omitted. This EPG acquisition unit 23 is a unit which acquires an EPG distributed (along with the television broadcast, for example) by the distribution center 1. The second embodiment utilizing the EPG acquisition unit 23 is different from the first embodiment in the following point.

If the user starts viewing a new program of the cable television, the user changes the channel number for viewing a new program, or the category of the program being viewed changes while the channel number is not changed, the viewing period measurement unit 19 starts measuring the viewing period regardless whether the program is on a pay channel or a free channel. The measurement of the viewing period is finished if the user finishes the viewing of the program of the cable television, or changes the channel, or the category of the program being viewed changes.

Whether the category of the program being viewed has been changed or not is determined based on category information in the EPG acquired by the EPG acquisition unit 23, and information on the time of the broadcast of the program.

The program classification unit 20 classifies a program for which the viewing period is being measured by the viewing period measurement unit 19 according to the program category information in addition to the channel number. The category of the program being viewed may be classified according to the program category information acquired by the EPG acquisition unit 23. The program classification unit 20 transmits the channel and the program category of the classified program to the viewing period accumulation unit 21.

The viewing period accumulation unit 21 accumulates the viewing periods measured by the viewing period measurement unit 19 respectively for the channel number and the program category according to the classifications (the channel number and the channel category according to the present embodiment) acquired by the program classification unit 20, and stores the accumulated viewing periods in the memory 18. It is not intended to limit in what form the accumulated periods are stored in the memory 18 to the configuration according to the present embodiment, and can be modified in various ways. In other words, there may be provided a configuration that the viewing period is accumulated according to a single set of two pieces of information, the channel number and the program category. For example, an accumulated viewing period of sports programs on the channel 1 is ten hours.

Though the display information generation unit 22 has a configuration for generating display information on the viewing period for the respective channels, which is the same as that of the first embodiment, the display information generation unit 22 is different in generating display information to show the viewing period for the respective program categories as shown in FIG. 6. FIG. 6 shows an example of a state where data transmitted from the display information generation unit 22 is shown on the display device 13.

It is not intended to limit the categorization of the programs to the configuration according to the present embodiment, and even finer categorization may be carried out as long as the EPG permits. In other words, sports programs may be further categorized into baseball programs and soccer programs, or movies programs may be further categorized into Japanese movies and foreign movies, for example.

The operation of the CPU 17 to show the viewing tendency of the user as information in the configuration according to the second embodiment has the same flow as that of the first embodiment except the differences from those of the first embodiment described above, and a description thereof, therefore, is omitted.

### Third Embodiment

A description will now be given of a third embodiment relating to a configuration of the broadcast reception device 12, which can show the viewing tendency of the user as information. The same components are denoted by the same numerals as of the first and second embodiments and will not be further explained.

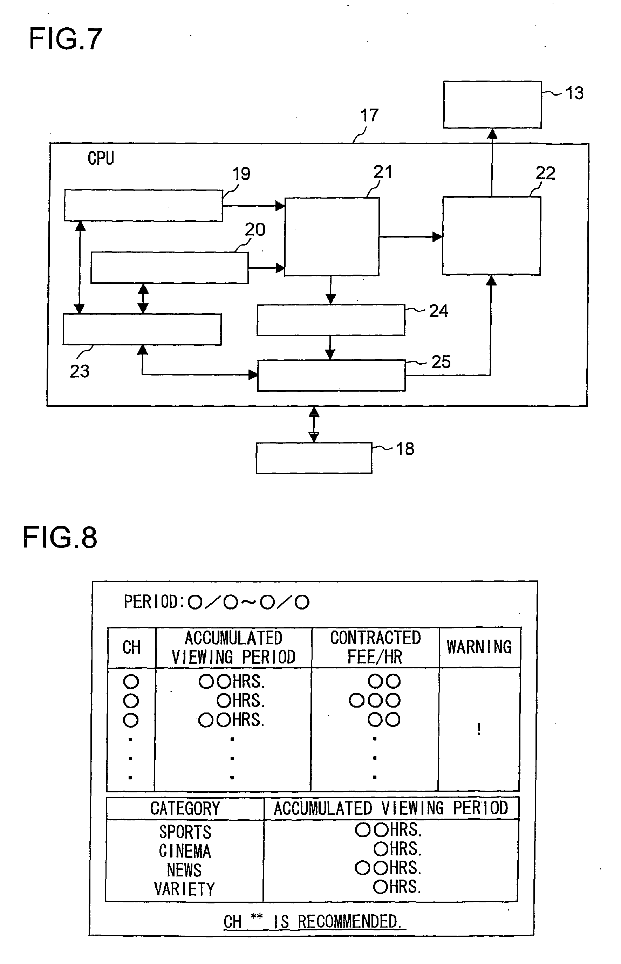

FIG. 7 is a block diagram to show a configuration of the broadcast reception device 12 according to the third embodiment. FIG. 7 shows only a configuration which shows the viewing tendency of the user as information for the user to easily determine whether to continue, change, or cancel the subscription contract. Moreover, for the sake of illustration, the display device 13 connected to the broadcast reception device 12 is also shown. As shown in FIG. 7, the CPU 17 equipped for the broadcast reception device 12 according to the third embodiment includes the viewing period measurement unit 19, the program classification unit 20, the viewing period accumulation unit 21, the display information generation unit 22, the EPG acquisition unit 23, a determination unit 24, and a search unit 25.

The configurations of the viewing period measurement unit 19, the program classification unit 20, the viewing period accumulation unit 21, and the EPG acquisition unit 23 are the same as those of the second embodiment, and a description thereof, therefore, is omitted.

The determination unit 24 determines program categories which satisfy predetermined criteria from the information on the viewing periods for the respective program categories of the information on the viewing periods stored in the memory 18 by the viewing period accumulation unit 21, and transmits the determined program categories to the search unit 25, which will be described later. The program categories meeting the predetermined criteria may include a program category (or categories) whose viewing period is the longest, and a program category (or categories) whose viewing period has exceeded a period predetermined by the user or the like.

The search unit 25 searches for pay channels meeting predetermined criteria by means of the EPG information acquired by the EPG acquisition unit 23 based on the program category information transmitted from the determination unit 24. The pay channels meeting the predetermined criteria may include a pay channel which most frequently broadcasts programs in the categories determined by the determination unit 24, and a pay channel which broadcasts programs in the categories determined by the determination unit 24 more than predetermined times. The search unit 25 transmits the information of the pay channels obtained by the search to the display information generation unit 22.

According to the third embodiment, the display information generation unit 22 generates display information on the pay channels obtained by the search unit 25 as the display information in addition to the information generated in the second embodiment. FIG. 8 shows an example of a state where data transmitted from the display information generation unit 22 is shown on the display device 13 according to the present embodiment. As FIG. 8 shows, information introducing the pay channels to the user is shown according to the third embodiment.

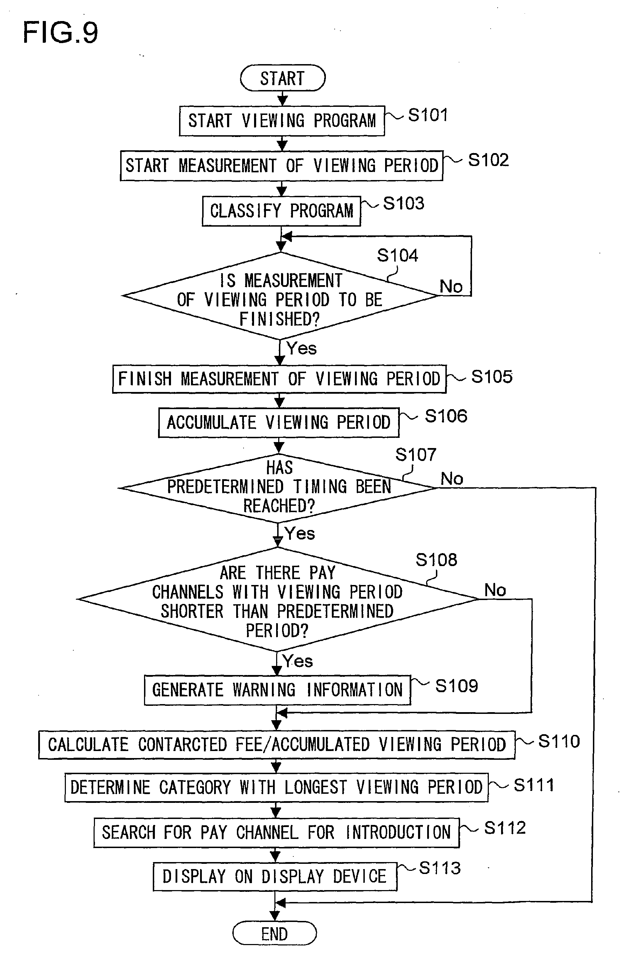

A description will now be given of an example of the operation carried out by the CPU 17 configured as described above to show the viewing tendency of the user as information to promote the determination by the user whether to continue, change, or cancel the subscription contract with reference to a flowchart shown in FIG. 9. First, if the user selects a channel of the cable television system to start viewing a program (step S101), the viewing period measurement unit 19 accordingly starts the measurement of the viewing period (step S102). The program classification unit 20 then recognizes the channel number presently being viewed, and classifies the program (step S103). The type (channel number and program category in this case) of the classified program is transmitted to the viewing period accumulation unit 21. For the classification of the program category, the program category information from the EPG obtained by the EPG acquisition unit 23 is used.

Then, the CPU 17 determines whether the measurement of the viewing period is to be finished or not (step S104). According to the present embodiment, the measurement of the viewing period is finished if the user finishes the viewing of the program of the cable television, or changes the channel, or the category of the program being viewed changes. If the CPU 17 determines that the measurement of the viewing period is to be finished, the measurement of the viewing period by the viewing period measurement unit 19 is finished (step S105). The measured viewing period is transmitted to the viewing period accumulation unit 21. On the other hand, if the CPU 17 determines that the measurement of the viewing period is not to be finished, the measurement of the viewing period continues.

The viewing period accumulation unit 21 accumulates the independent viewing periods measured by the viewing period measurement unit 19 according respectively to the channel number and the program category classified by the program classification unit 20 (step S106). The accumulated viewing period information is stored in the memory 18.

The CPU 17 then determines whether the predetermined timing for notifying the viewing tendency of the user has been reached or not (step S107). If the predetermined timing has not been reached, the CPU 17 finishes the operation without to show the viewing tendency, and carries out the steps S101 to S107 if the user starts viewing a next program. On the other hand, if the predetermined timing for notifying the viewing tendency of the user has been reached, the CPU 17 determines whether there are pay channels whose accumulated viewing period is shorter than the period predetermined by the user or the like (step S108).

If there are such pay channels, the display information generation unit 22 generates warning information (step S109). On the other hand, if there are no such pay channels, the CPU 17 proceeds to the next step without generating the warning information. In other words, the contracted fee per viewing period is calculated by dividing the subscription contracted fee (monthly contracted fee, for example) by the viewing period for the respective pay channels (step S110). Moreover, the determination unit 24 determines the program category which has the longest period viewed by the user (step S111), and the search unit 25 searches for a pay channel which most frequently broadcast programs in the program category which has the longest period viewed by the user determined by the determination unit 24 by means of the EPG (step S112).

The display information generation unit 22 then generates display information on the accumulated viewing periods for the respective channel numbers, the warning information, the contracted fees per viewing period for the respective channel numbers (only for the pay channels), the accumulated viewing periods for the respective program categories, and the pay channels as the introduction information searched by the search unit 25 stored in the memory 18, and transmits the generated display information to the display device 13, and the display device 13 displays the information (step S113).

Though the above embodiments show the cases where the broadcast reception device 12 according to the present invention is equipped in the cable television system, the broadcast reception device 12 according to the present invention is surely applicable to a broadcast reception device which receives pay broadcasts such as BS broadcasts and CS broadcasts in addition to the cable television system.

The broadcast reception devices according to the present invention which easily obtains the viewing tendency of a user promotes the decision to change or cancel a subscription contract for pay broadcasts, thereby permitting change or cancel of the subscription contract by means of well-known methods.

A user can use the broadcast reception device according to the present invention to easily determine whether a contract for a pay channel is to be continued, changed, or canceled. The broadcast reception device according to the present invention can be widely applicable as a broadcast reception device.

Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

## Claims

1. A broadcast reception device comprising:
a storage unit;
a viewing period measurement unit that measures a period of viewing a program;
a program classification unit that classifies a viewed program based on a predetermined program classification;
a viewing period accumulation unit that accumulates the period measured by the viewing period measurement unit based on the type classified by the program classification unit, and stores the accumulated period in the storage unit; and
a display information generation unit that displays the accumulation information of the viewing period stored in the storage unit in predetermined timing on a display device.

2. The broadcast reception device according to claim 1, further comprising a descrambling unit that descrambles a scrambled television broadcast signal in order to subscribe a program of a pay channel or free channel based on a subscription contract with a broadcaster the broadcast reception device is **characterized by** a structure in which
the predetermined program classification includes at least a classification based on a channel number of the pay channel, and
said display information generation unit also generates warning information which notifies a pay channel for which the accumulation of the viewing period is shorter than a predetermined criterion.

3. The broadcast reception device according to claim 2, the broadcast reception device is **characterized by** a structure in which the display information generation unit generates a fee per period as information to be displayed based on a subscription contracted fee for each pay channel and the accumulation period of the viewing period.

4. The broadcast reception device according to any one of claims 1 to 3, further comprising an electronic program guide acquisition unit that acquires an electronic program guide the broadcast reception device is **characterized by** a structure in which the program classification unit classifies the viewed program based on the electronic program guide.

5. The broadcast reception device according to claim 4 the broadcast reception device is **characterized by** a structure in which the program classification unit carries out classification based on a program category, further comprising:
a determination unit that determines whether an accumulation of a viewing period in a specific category satisfies a predetermined criterion;
a search unit that searches the electronic program guide for a pay channel which satisfies a predetermined criterion in the program category determined by the determination unit, the broadcast reception device is **characterized by** a structure in which
said display information generation unit generates display information introducing the pay channel searched by the search unit.

6. A broadcast reception device comprising:
a descrambling unit that descrambles a scrambled television broadcast signal in order to subscribe a program of a pay channel or free channel based on a subscription contract with a broadcaster;
a storage unit;
a viewing period measurement unit that measures a period of viewing a program;
an electronic program guide acquisition unit that acquires an electronic program guide;
a program classification unit that classifies a viewed program based on a channel number and based on the acquired electronic program guide;
a viewing period accumulation unit that accumulates the period measured by the viewing period measurement unit based on the type classified by the program classification unit, and stores the accumulated period in the storage unit;
a determination unit that determines a program category which has the longest accumulation of the viewing period;
a search unit that searches the electronic program guide for a pay channel which most frequently broadcasts programs in the determined program category; and
a display information generation unit that displays accumulation information of the viewing period and the searched pay channel in predetermined timing.
